# EUROPEAN PATENT APPLICATION

(11) **EP 2 630 997 A1**
(43) Date of publication of application: **28.08.2013**
(21) Application number: 13156509.5
(22) Date of filing: 25.02.2013
(51) Int. Cl.: A63B 49/10, A63B 59/00, B29C 70/44, A63B 49/02

(54) **Tennis racket and method for manufacturing the same**

(30) Priority: 27.02.2012 JP 2012040538
(71) Applicant: Yonex Kabushiki Kaisha Joint-stock company of Japan, Tokyo 113-8543 (JP)
(72) Inventor: Saito, Shinji, Nagaoka-shi, Niigata, 949-5123 (JP); Suetake, Junya, Nagaoka-shi, Niigata, 949-5123 (JP); Iwasawa, Tomoya, Tokyo, 113-8543 (JP)
(74) Representative: Heine, Christian Klaus

(57) **Abstract**

A tennis racket includes a frame that surrounds a hitting face for hitting a ball, wherein a foam material is provided inside two side portions of the frame on opposite sides of a predetermined area of the hitting face, and the two side portions of the frame have a strength that is higher than a strength of another portion of the frame.

## Description

### CROSS REFERENCE TO RELATED APPLICATION

The present application claims priority upon Japanese Patent Application No. 2012-40538 filed on February 27, 2012, which is herein incorporated by reference.

### Background

### Technical Field

The present invention relates to a tennis racket and a method for manufacturing a tennis racket.

### Related Art

A tennis racket includes a frame that surrounds a hitting face for hitting a ball.

There has also been proposed a tennis racket in which the frame is formed hollow with the entire hollow portion is uniformly filled with foam material (e.g., see Japanese Patent Application Laid-Open Publication No. 6-105923).

The area of the hitting face that is frequently used differs from player to player in some cases. For example, top players (advanced players) tend to frequently use the area of the hitting face at the tip side (side opposite to the grip portion) than the substantially central portion (sweet spot). For this reason, there is demand for an increase in particularly rigidity (strength) and vibration absorption in the portions of the frame that correspond to the area that is frequently used.

Incidentally, since a foam material is formed uniformly inside the frame of tennis rackets such as those described above, it has been difficult to increase rigidity and vibration absorption at specific positions in the frame. Increasing rigidity by providing foam material to the entire frame leads to a problem of an increase in repulsive force (due to a decrease in frame flexure) and a decline in control when hitting the ball (ball control), and also leads to a problem of difficulty in weight reduction.

### Summary of the Invention

The present invention has been made in view of these circumstances, and an object thereof is to provide a tennis racket that allows improvement in rigidity and vibration absorption at a desired position and allows improvement in ball control and reduction in weight, as well as a method for manufacturing the same.

A tennis racket according to a main invention for achieving the aforementioned object is a tennis racket including a frame that surrounds a hitting face for hitting a ball, wherein a foam material is provided inside two side portions of the frame on opposite sides of a predetermined area of the hitting face, and the two side portions of the frame have a strength that is higher than a strength of another portion of the frame.

According to the tennis racket of the present invention, rigidity and vibration absorption at a desired position in the frame can be improved, and ball control can be improved and the weight thereof can be reduced as well.

Other features of the present invention will become clear from the explanation in the present specification and the description of the accompanying drawings.

### Brief Description of Drawings

FIG. 1 is a front view of a tennis racket 1 according to an embodiment of the present invention;
FIG. 2 is a side view of the tennis racket 1 according to the embodiment of the present invention;
FIG. 3A is a schematic diagram showing a method for manufacturing the tennis racket 1;
FIG. 3B is another schematic diagram showing the method for manufacturing the tennis racket 1;
FIG. 3C is another schematic diagram showing the method for manufacturing the tennis racket 1;
FIG. 3D is another schematic diagram showing the method for manufacturing the tennis racket 1;
FIG. 4A is a cross-sectional view taken along A-A in FIG 3B;
FIG. 4B is a cross-sectional view taken along B-B in FIG. 3B;
FIG. 5 is a schematic diagram showing an aspect of a hardness test performed with the foam material alone;
FIG. 6 is a schematic diagram showing an aspect of a test regarding the amount of cross-section deformation of the racket;
FIG. 7 is a schematic diagram showing an aspect of a racket bending test; and
FIG. 8 is an illustrative diagram of a modified example.

### Description of Exemplary Embodiments

### Summary of Disclosure

At least the following matters will be made clear by the explanation in the present specification and the description of the accompanying drawings.

Specifically, the tennis racket that will be made clear is a tennis racket including a frame that surrounds a hitting face for hitting a ball, wherein a foam material is provided inside two side portions of the frame on opposite sides of a predetermined area of the hitting face, and the two side portions of the frame have a strength that is higher than a strength of another portion of the frame.

According to such tennis racket, rigidity and vibration absorption at a desired position in the frame can be improved, and ball control can be improved and the weight thereof can be reduced as well.

In the above tennis racket, a foam material for filling that is different from the foammaterial is provided inside the another portion of the frame. Also, the foam material is provided inside the another portion of the frame, and an amount of the foam material in the two side portions is different from an amount of the foam material in the another portion.

According to such tennis racket, a hollow portion can be prevented from being made to the frame, and foreign particles can be prevented from entering into the frame.

In the above tennis racket, it is desirable that the frame has a frame portion that surrounds the hitting face on one end side, and has a grip portion on another end side, and the predetermined area is an area on the one end side than substantially a middle of the hitting face.

According to such tennis racket, optimum hitting characteristics (e.g., control) can be obtained when used by a player who often uses one end side of the hitting face (e.g., a top player).

In the above tennis racket, it is desirable that when a position of the one end of the frame portion is set at 0 degrees relative to a center of the hitting face, the foam material is provided in a range of 20 degrees to 60 degrees of the frame portion.

According to such tennis racket, it is possible to increase rigidity and vibration absorption when hitting the ball with one end side of the hitting face.

Also, a method for manufacturing a tennis racket including a frame having a first strength and a second strength that is higher than the first strength, including the steps of arranging a foam material on a resin sheet in an area that corresponds to the second strength, forming a sheet tube by wrapping the resin sheet, on which the foam material is arranged, into a cylindrical shape, and forming a frame in which the resin sheet and the foam material are integrally molded, by bending the sheet cylinder to be set in a die, and then causing the foam material to undergo foaming.

### ===Embodiments===

### <<<Example of racket configuration>>>

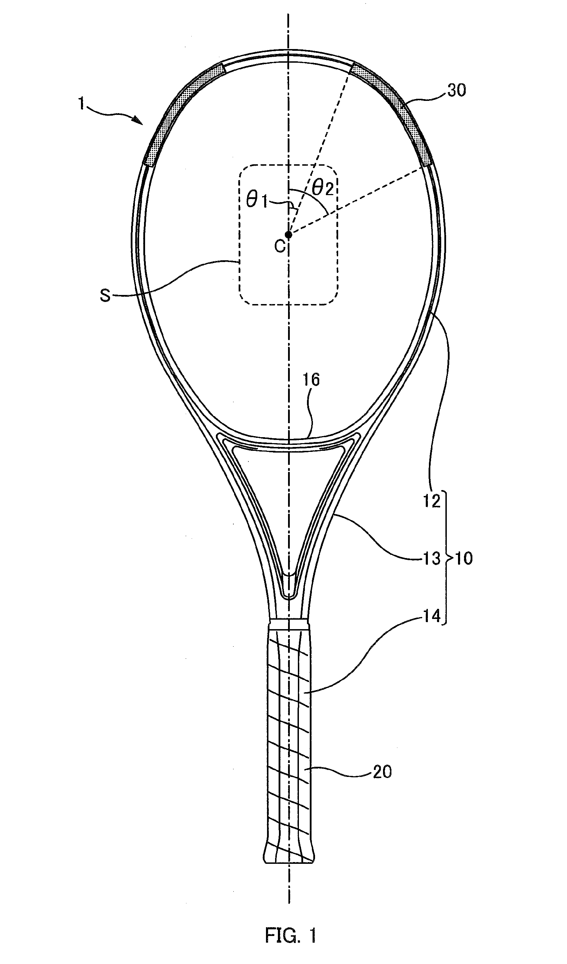

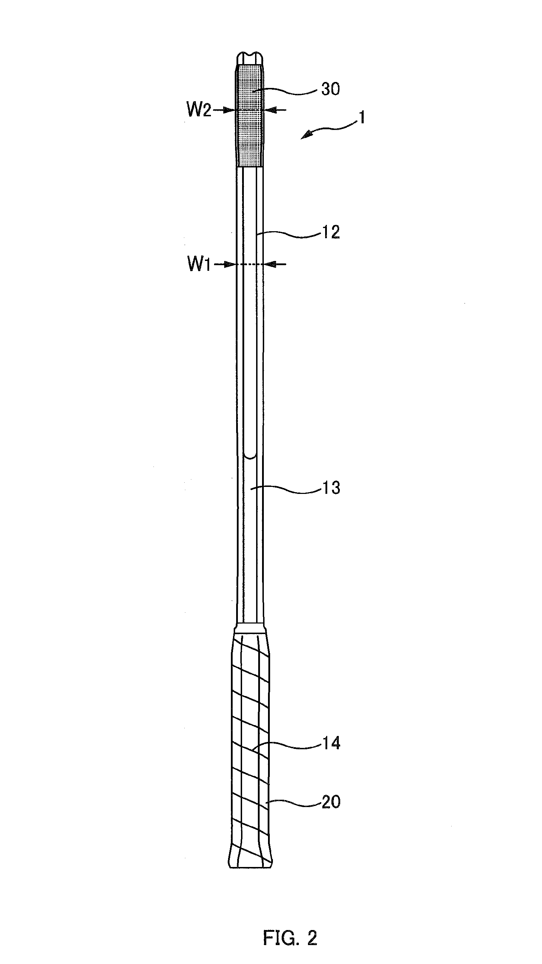

A configuration example of a tennis racket 1 according to the present invention will be described below with reference to FIGS. 1 and 2. FIG. 1 is a front view of the tennis racket 1 according to the present embodiment. FIG. 2 is a side view of the tennis racket 1 according to the present embodiment. Note that the upper side (with respect to the figure) of the tennis racket 1 shown in FIGS. 1 and 2 is called the tip side, and the lower side is called the base side.

As shown in FIG. 1, the tennis racket 1 of the present embodiment includes a frame 10 that is configured by a face portion 12 (corresponding to the frame portion), a shaft portion 13, and a grip portion 14.

The face portion 12 is provided in the top portion of the tennis racket 1 and is formed in a substantially elliptical shape. Insertion holes (not shown) for inserting a string are provided, in an inner circumferential portion and an outer circumferential portion of the face portion 12 (and a later-described yoke portion 16), so as to communicate the inner and outer portions, and therefore a string that is inserted into the insertion hole at the outer circumferential portion can be taken out from the insertion hole at the inner circumferential portion. A plurality of these insertion holes (not shown) are provided in a line along the circumferential direction of the face portion 12. When a string is strung between the insertion holes, the string segments cross each other in a grid form within the face portion 12. A substantially elliptical hitting face (face for hitting a ball) is thus formed within the face portion 12. Also, a sweet spot S shown in FIG. 1 is a substantially middle area of the hitting face that includes the center C of the hitting face, and the size of this area is dependent on the shape of the hitting face (in other words, the shape of the face portion 12 seen from the front).

The shaft portion 13 is a portion that connects the face portion 12 and the grip portion 14, and is formed so as to branch out into two from the grip portion 14 toward the face portion 12. Also, the yoke portion 16 that configures a portion of the hitting face is provided at the boundary between the face portion 12 and the shaft portion 13.

The grip portion 14 is the portion that is gripped by the player, and is positioned in the base end portion of the tennis racket 1. Normally, grip tape 20 is wound around the grip portion 14 of the tennis racket 1. The grip tape 20 absorbs the shock generated when hitting a ball, and also improves the grip.

Note that a fiber-reinforced resin, which is obtained by impregnating fiber with resin such as mainly carbon fiber, glass fiber, organic fiber, ceramic fiber, or the like, is used to form the frame 10 (the face portion 12, the shaft portion 13, and the grip portion 14) of the tennis racket 1. In the present embodiment, the frame 10 uses a thermosetting fiber-reinforced resin whose reinforcing fiber is carbon fiber, and as will be described later, the frame 10 is formed by rolling up the fiber-reinforced resin in a sheet form (a carbon sheet) so as to form a hollow bar body, bending the bar body into the shape of the tennis racket 1, and then fitting the bar body into a predetermined die and performing heat and pressure molding.

The frame 10 of the present embodiment is also provided with a foam material 30 in the areas indicated by hatching (referred to hereinafter as hatched portions) in the face portion 12 that surrounds the hitting face. As shown in FIG. 1, the portions where the foam material 30 is provided are areas on respective sides (two side portions) of the face portion 12 that are on opposite sides of a predetermined area of the hitting face on the tip side than the sweet spot S. More specifically, assuming that the tip (upper end) position of the face portion 12 is 0 degrees relative to the center C of the hitting face, the foam material 30 is provided inside the area of the face portion 12 that corresponds to the range between angle θ₁ (e.g., 20 degrees) and angle θ₂ (e.g., 60 degrees). Note that the foam material 30 is not provided in portions other than the hatched portions of the frame 10 (referred to hereinafter as non-hatched portions).

Also, as shown in FIG. 2, the width (length in the normal direction relative to the hitting face) W₂ of the frame 10 in the hatched portions is made greater than the width W₁ of the frame 10 in the non-hatched portions. Specifically, the width W₁ is 20 mm, and the width W₂ is 22 mm. Since the width of the frame 10 in the hatched portions is made greater than that in the non-hatched portions in this way, more of the foam material 30 can be provided in the frame 10, and the strength can be increased even more.

The following describes the reason why the foam material 30 is provided to the frame 10 (the face portion 12) only partially in this way. As one example, top players (advanced players) tend to frequently use the area on the tip side of the hitting face than the sweet spot S. For this reason, there is a demand to increase particularly rigidity (strength) and vibration absorption in the areas of the frame 10 that correspond to this area. Since the foam material 30 is provided in these areas in the present embodiment, it is possible to improve rigidity and vibration absorption when hitting a ball with the tip side of the hitting face.

Also, if the foam material 30 were uniformly provided in the entire interior of the frame 10, the overall strength would increase, thus leading to a risk of a decrease in flexure, an increase in repulsive force, and a decline in ball control. Furthermore, the overall weight of the frame 10 would increase, thus making a reduction in weight difficult. In contrast to this, with the present embodiment, the foam material 30 is provided on the two sides (the hatched portions) of the frame 10 (the face portion 12) that are on opposite sides of a predetermined area on the tip side than the sweet spot S, and the foam material 30 is not provided in the other areas (the non-hatched portions), thus allowing the face portion 12 to flex to an appropriate amount when hitting a ball. This enables to improve control when hitting a ball. This also makes a reduction in weight possible.

### <<<Racket manufacturing method>>>

### <<Present embodiment>>

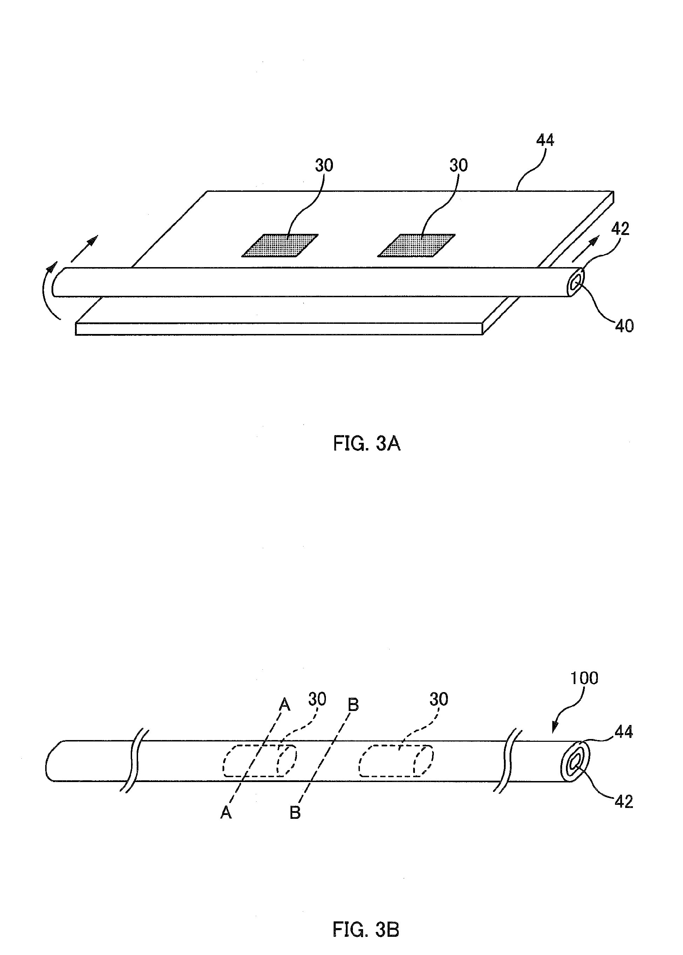

A method for manufacturing the tennis racket 1 of the present embodiment will be described below with reference to FIGS. 3A to 3D. FIGS. 3A to 3D are schematic diagrams showing the method for manufacturing the tennis racket 1.

The method for manufacturing the tennis racket 1 of the present embodiment has a foam material arranging step, a sheet tube forming step, a bending step, and a die molding step.

### <Foam material arranging step>

First, as shown in FIG. 3A, a carbon sheet 44 (which corresponds to a resin sheet) of prepreg fiber-reinforced resin (FRP) mainly made of carbon fiber is prepared, and the foam material 30 is arranged in areas that correspond to the hatched portions in FIG. 1. The foam material 30 is obtained by mixing a resin-based adhesive and a thermally expandable foam material, and forming the mixture into a sheet shape.

Note that in FIG. 3A, the midpoint of the carbon sheet 44 in the lengthwise direction (left-right direction in the figure) will become the tip of the frame 10 (the face portion 12) of the tennis racket 1, and therefore positions on the frame 10 of the tennis racket 1 can be specified in advance based on the distance from the midpoint. In the present embodiment, the size of the sheets of the foam material 30 and the positions where they are arranged on the carbon sheet 44 are set such that the foam material 30 is provided to the hatched portions of the frame 10 in FIG. 1.

### <Sheet tube forming step>

Next, as shown in FIG. 3A, a tube 42 is fitted around a mandrel 40, and the carbon sheet 44 having the foam material 30 arranged thereon is wound around the tube 42. Note that the mandrel 40 is a round bar-shaped member (cored bar) whose length corresponds to the entire length of the frame 10 (the face portion 12, the shaft portion 13, and the grip portion 14) of the tennis racket 1. Also, the tube 42 is a flexible resin tube (e.g., a nylon tube).

The mandrel 40 is then removed, and thus a cylindrical tube body (referred to hereinafter as a sheet tube 100) is formed as shown in FIG. 3B.

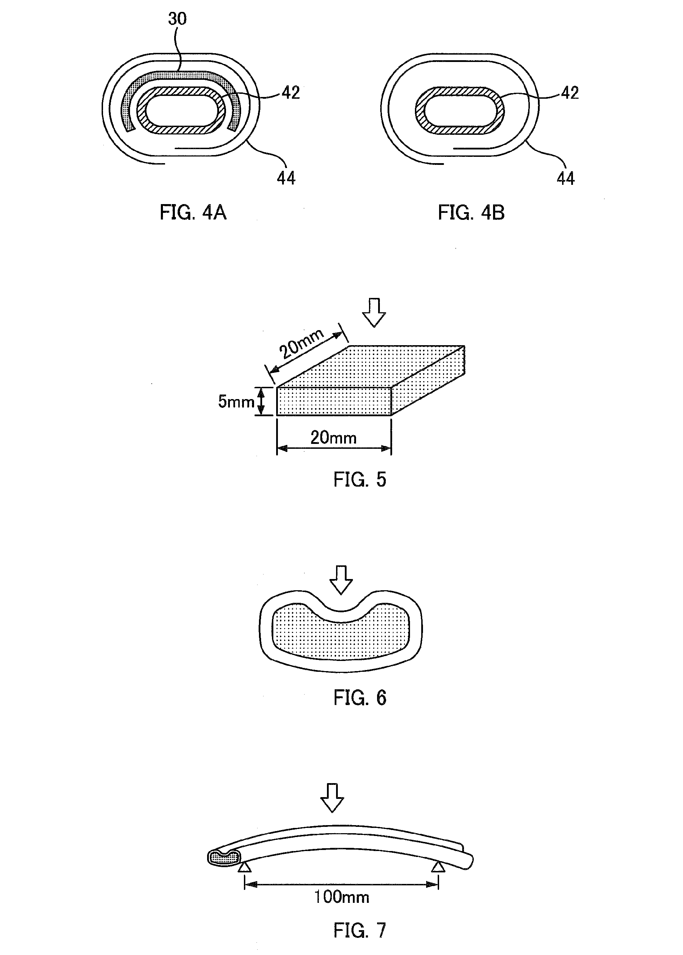

FIG. 4A is a cross-sectional view taken along A-A in FIG 3B, and FIG. 4B is a cross-sectional view taken along B-B in FIG. 3B. As shown in FIG. 4A, in the A-A cross-section of the sheet tube 100, the foam material 30 is arranged on the outside of the tube 42. The carbon sheet 44 is then wound on the outside of the foam material 30. In contrast, as shown in FIG. 4B, in the B-B cross-section of the sheet tube 100, the carbon sheet 44 is wound on the outside of the tube 42, and the foam material 30 is not provided.

### <Bending step>

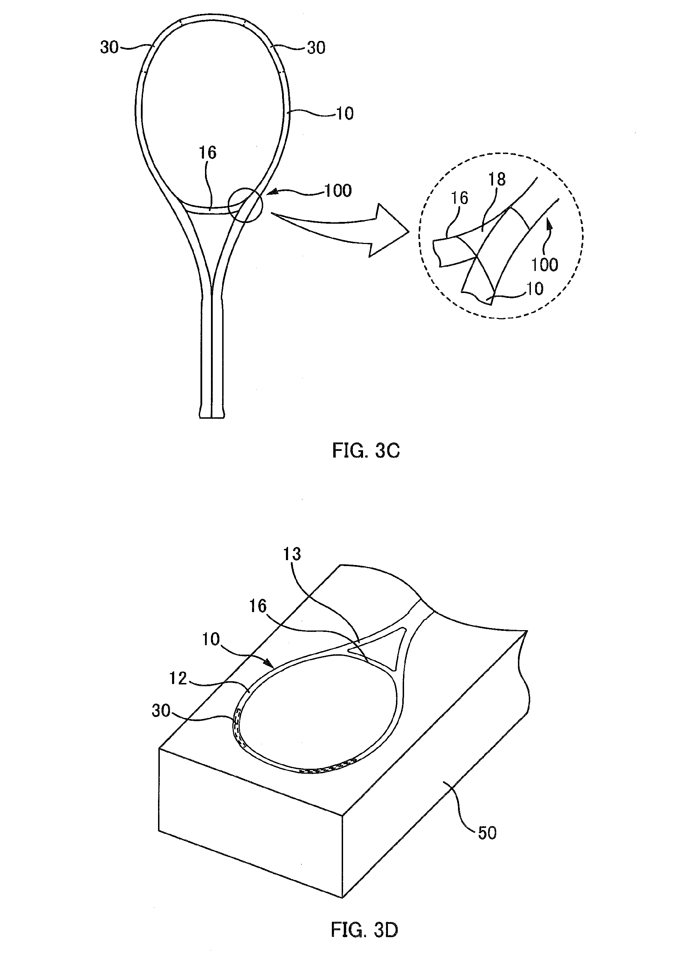

As shown in FIG. 3C, the sheet tube 100 is bent so as to conform to the shape of the frame 10 (the face portion 12, the shaft portion 13, and the grip portion 14) of the tennis racket 1. Also, the yoke portion 16, which is formed using a configuration similar to that of the sheet tube 100, is attached in the border portions between the face portion 12 and the shaft portion 13, and a carbon sheet 18 is wound around the border portions. Note that the foam material 30 may be provided inside the yoke portion 16.

### <Die molding step>

The sheet tube 100 bent in the shape of the frame 10 and the yoke portion 16 attached to the sheet tube 100 are set in a die 50 as shown in FIG. 3D. Heating is then performed, and air is introduced into the tube 42 through the opening at the end (base) of the grip portion 14 portion of the sheet tube 100. The sheet tube 100 undergoes plastic deformation due to being heated, and at this time, the carbon sheet 44 is pushed and spread outward due to expansion of the tube 42, and the carbon sheet 44 is pressed against the die 50. The plastically deformed sheet tube 100 is thus molded into a shape that conforms to the die 50. Note that although the foam material 30 expands (foams) at this time due to being heated, this expansion is suppressed due to being subjected to air pressure from the tube 42. The foam material 30 then expands when the air pressure inside the tube 42 is released. Accordingly, in the areas (hatched portions) where the foam materials 30 are formed, the tube 42 is pressed into the surrounding foam material 30, and the interior of the frame 10 is filled with the foam material 30. This results in the molding of the frame 10 in which the carbon sheet 44 and the foam material 30 are integrated.

### <<Comparative example>>

The following describes a method for manufacturing a tennis racket according to a comparative example. In this comparative example, a liquid-form foam material that has a high expansion ratio (e.g., urethane) is injected into a heat-molded hollow frame through an opening at the base of the grip portion (end portion of the hollow portion), and then is caused to undergo foaming. Due to such foam material (the foam material used in this comparative example being referred to hereinafter as the foam material 30') undergoing foaming, the foam material 30' is uniformly provided inside the entire the frame 10.

In contrast, with the present embodiment, the sheets of the foam material 30 are arranged on the carbon sheet 44 before the sheet tube 100 is formed, thus enabling to provide the foam material 30 easily in arbitrary areas of the frame 10 by changing the size and arrangement position of the foam material 30.

### <<<Foam material characteristics>>>

The following describes a comparison of characteristics (e.g., hardness) of the foam material 30 according to the present embodiment and the foam material 30' according to the comparative example. Note that as described above, the foam material 30 is formed by mixing a resin-based adhesive and a thermally expandable foam material, and the foam material 30' is a highly expandable urethane foam material.

The following experiments were performed on cases with the foam materials alone and with them formed inside the frame 10. The results of these experiments are described below.

### <Foam material hardness test>

### Test method

FIG. 5 is a schematic diagram showing aspects of a hardness test performed on the foam material alone. Test pieces (samples) having vertical and horizontal lengths of 20 mm and a height of 5 mm were created using the respective foam materials (alone) in the foamed state, and the amount of deformation when a force of 10 kgf (approximately 98 N) was applied in the direction of the arrow shown in FIG. 5 was measured.

### Test results

The amount of deformation was 2.44 mm with the foam material 30', whereas the amount of deformation was 1.78 mm with the foam material 30. Accordingly, in the case of the foam material alone, it was confirmed that hardness improved approximately 27% with the foam material 30 of the present embodiment compared to the foam material 30' of the comparative example.

### <Test on amount of racket cross-section deformation>

### Test method

FIG. 6 is a schematic diagram showing aspects of the test on the amount of racket cross-section deformation.

The respective foam materials were provided inside the frame 10 (the face portion 12), and the amount of deformation when applying a force of 50 kgf (approximately 490 N) toward the interior of the face portion 12 was measured.

### Test results

The amount of deformation was 0.51 mm with the comparative example (the foam material 30'), whereas the amount of deformation was 0.41 mm with the present embodiment (the foam material 30). Accordingly, it was confirmed that an improvement of approximately 12% with respect to the amount of racket cross-section deformation was achieved with the foam material 30 of the present embodiment compared to the foam material 30' of the comparative example.

### <Racket bending deformation test>

### Test method

FIG. 7 is a schematic diagram showing aspects of a racket bending test.

The areas where the respective foam materials were provided in the frames 10 (the face portions 12) were cut to a length of 100 mm, and the amount of bending was measured when supporting the two ends and applying a force of 50 kgf (approximately 490 N) to the center.

### Test results

The amount of bending was 0.73 mm with the comparative example (the foam material 30'), whereas the amount of bending was 0.69 mm with the present embodiment (the foam material 30). Accordingly, it was confirmed that an improvement of approximately 5% with respect to the amount of racket bending deformation was achieved with the foam material 30 of the present embodiment compared to the foam material 30' of the comparative example.

As described above, the tennis racket 1 of the present embodiment includes the frame 10 that surrounds the hitting face for hitting a ball, and the foam material 30 is provided inside (in hatched portions) the frame 10 on the two sides of the frame 10 that are on opposite sides of an area of the hitting face on the tip side than the sweet spot S. In this way, the strength of the areas on the respective sides of the frame 10 is increased. This enables to improve the rigidity and vibration absorption when hitting a ball with the tip side of the hitting face. Also, since the foam material 30 is not provided in the other areas (the non-hatched portions), the face portion 12 can be allowed to flex by an appropriate amount when hitting a ball, and ball control can be improved. It is also possible to achieve a reduction in weight compared to the case of providing the foam material 30 in the entire frame 10.

### Variation

The following describes a modified example of the present embodiment. In the above-described embodiment, the foam material was not provided in the non-hatched areas (non-hatched portions) (the interior of the frame 10 was hollow in the non-hatched portions) of the frame 10 of the tennis racket shown in FIG. 1. However, in this modified example, a foam material (foam material 32) different from the foam material 30 is provided in the non-hatched portions.

The foam material 32 is a foam material (which corresponds to a foam body for filling) formed into a sheet shape using a material whose hardness is different from that of the foam material 30. Note that the hardness of the foam material 32 is lower than the hardness of the foam material 30.

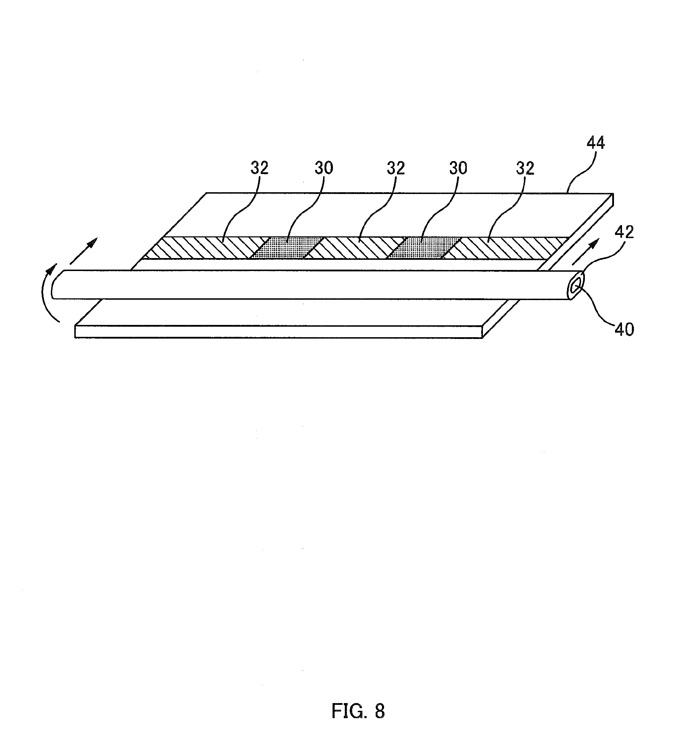

FIG. 8 is an illustrative diagram of a method for manufacturing the variation of the present embodiment.

As shown in FIG. 8, the foam material 30 is arranged on the carbon sheet 44 at positions corresponding to the hatched portions, and the foam material 32 is arranged on the carbon sheet 44 at positions corresponding to the non-hatched portions in FIG. 1. The following manufacturing method is similar to that of the above-described embodiment. In this way, whereas the foam material was not provided in the non-hatched portions of the frame 10 of the tennis racket 1 shown in FIG. 1 (the interior of the frame 10 was hollow in the non-hatched portions) in the above-described embodiment, a foam material (the foam material 32) different from the foam material 30 is provided in the non-hatched portions in this modified example. Since the foam material 30 and the foam material 32 have different hardnesses, the strength can be changed according to the position in the frame 10.

With this modified example, the rigidity of the hatched portions can be increased, while the non-hatched portions are prevented from being hollow. This enables to prevent chips, foreign particles, and the like from entering the frame 10 when the holes for the insertion of the string are formed in the face portion 12, for example.

Note that although the foam material 32 is provided to all of the non-hatched portions in this modified example, the modified example is not limited to such. For example, the foam material 32 may be provided on only the tip side of the tennis racket 1 (the range between the two areas where the foam material 30 is provided).

Also, the amount of foam material 30 used (the density thereof) in the hatched portions of the tennis racket 1 in FIG. 1 may be different from the amount of foam material 30 used (the density thereof) in the non-hatched portions. For example, a configuration is possible in which a thinly-formed sheet of the foam material 30 is arranged in the lengthwise direction of the carbon sheet 44, and then the foam material 30 is further arranged thereon in areas corresponding to the hatched portions (the positions where the foam material 30 is arranged in FIG. 3A). The strength can be changed according to the position in the frame 10 in this case as well.

### Other embodiments

The above-described embodiment is for facilitating understanding of the present invention, and is not intended to limit the interpretation of the present invention. As a matter of course, the present invention can be changed and modified without departing from spirit the invention, and equivalents thereof are encompassed in the present invention.

### <Foam material 30>

In the above-described embodiment, the foam material 30 is obtained by mixing a resin-based adhesive and a thermally expandable foam material, and forming the mixture into a sheet shape, but the present invention is not limited to this. The foam material 30 may be configured from other compositions as long as it can be formed into a sheet shape and expands (foams) due to heat or the like.

### <Position where Foam Material 30 is Formed>

In the above-described embodiment, the foam material 30 was provided to areas on the two sides of the face portion 12 that are on opposite sides of an area on the tip side than the sweet spot S (the areas of the face portion 12 that correspond to the range from angle θ₁ to angle θ₂ in FIG. 1), but the present invention is not limited to such. For example, in a case such as when the sweet spot S is frequently used, the foam material 30 may be provided to the two sides of the face portion 12 that are on opposite sides of the sweet spot S. Also, the area of the hitting face between the sweet spot S and the base side (side closer to the grip portion 14) is often used in the case of volleys performed mainly by middle-aged players, for example. In this case, the foam material 30 may be provided in areas on the respective sides of the face portion 12 that are on opposite sides of that area on the base side. Note that in the present embodiment, the areas where the foam material 30 is formed in the frame 10 (the face portion 12) are determined by the positions where the foam material 30 is arranged on the carbon sheet 44, thus making it is possible to easily change the positions where the foam material 30 is formed.

## Claims

1. A tennis racket comprising:
a frame that surrounds a hitting face for hitting a ball;
wherein a foam material is provided inside two side portions of the frame on opposite sides of a predetermined area of the hitting face, and the two side portions of the frame have a strength that is higher than a strength of another portion of the frame.

2. A tennis racket according to claim 1,
wherein a foam material for filling that is different from the foam material is provided inside the another portion of the frame.

3. A tennis racket according to claim 1,
wherein the foam material is provided inside the another portion of the frame, and
an amount of the foam material in the two side portions is different from an amount of the foam material in the another portion.

4. A tennis racket according to any one of claims 1 to 3,
wherein the frame has a frame portion that surrounds the hitting face on one end side, and has a grip portion on another end side, and
the predetermined area is an area on the one end side than substantially a middle of the hitting face.

5. A tennis racket according to claim 4,
wherein when a position of the one end of the frame portion is set at 0 degrees relative to a center of the hitting face, the foam material is provided in a range of 20 degrees to 60 degrees of the frame portion.

6. A method for manufacturing a tennis racket including a frame having a first strength and a second strength that is higher than the first strength, comprising the steps of:
arranging a foam material on a resin sheet in an area that corresponds to the second strength;
forming a sheet tube by wrapping the resin sheet, on which the foam material is arranged, into a cylindrical shape; and
forming a frame in which the resin sheet and the foam material are integrally molded, by bending the sheet cylinder to be set in a die, and then causing the foam material to undergo foaming.
